# EUROPEAN PATENT APPLICATION

(11) **EP 4 428 654 A1**
(43) Date of publication of application: **11.09.2024**
(21) Application number: 22909730.8
(22) Date of filing: 06.12.2022
(51) Int. Cl.: G06F 1/3234

(54) **APPLICATION PROGRAM SUPPRESSION METHOD AND ELECTRONIC DEVICE**

(30) Priority: 22.12.2021 CN 202111583775
(71) Applicant: Huawei Technologies Co., Ltd., Shenzhen, Guangdong 518129 (CN)
(72) Inventor: GUO, Chenyang, Shenzhen, Guangdong 518129 (CN); YIN, Jianfeng, Shenzhen, Guangdong 518129 (CN)
(74) Representative: Goddar, Heinz J.
(86) International application number: PCT/CN2022/136878
(87) International publication number: WO 2023/116415

(57) **Abstract**

This application discloses an application suppression method and an electronic device. The method includes: The electronic device monitors a plurality of application windows. When detecting that at least one application window in the plurality of application windows changes, the electronic device traverses window information of the plurality of application windows, and determines an application window that is invisible to a user. When all windows of a first application are invisible to the user, GPU suppression is performed on the first application, or when all windows of a first process are invisible to the user, GPU suppression is performed on the first process. This can effectively prevent the application or the process from occupying resources of the electronic device, and reduce a resource waste, thereby resolving application stuttering.

## Description

This application claims priority to Chinese Patent Application No. 202111583775.2, filed with the China National Intellectual Property Administration on December 22, 2021 and entitled "APPLICATION SUPPRESSION METHOD AND ELECTRONIC DEVICE", which is incorporated herein by reference in its entirety.

### TECHNICAL FIELD

Embodiments of the present invention relate to the field of electronic device technologies, and in particular, to an application suppression method and an electronic device.

### BACKGROUND

Currently, an electronic device (for example, a computer or a mobile phone) is increasingly thin and light. For example, the electronic device is the computer. In a process of using the computer, a user usually starts a plurality of applications. These started applications occupy resources of the computer. However, the resources of the computer are limited. When the plurality of applications share resources of the computer, application stuttering, heat generation of the entire computer, loud noise during heat dissipation, and the like are usually caused. As a result, user experience is seriously affected.

To resolve the foregoing problems, according to an existing application suppression method, the electronic device usually identifies a first application that occupies excessive computer resources, and adjusts a priority of a process of the first application, to reduce application stuttering.

### SUMMARY

Embodiments of this application provide an application suppression method and apparatus, and an electronic device, to reduce resource consumption of an application that is invisible to a user, so as to resolve application stuttering.

To achieve the foregoing objectives, the following technical solutions are used in embodiments of this application.

According to a first aspect, an embodiment of this application provides an application suppression method. The method may be performed by an electronic device, or may be performed by a component (for example, a chip, a chip system, or a processor) located in an electronic device. In the following, an example in which the method is performed by the electronic device is used for description. The electronic device includes a plurality of application windows. The method may include: monitoring the plurality of application windows; traversing window information of the plurality of application windows when it is detected that at least one application window in the plurality of application windows changes; obtaining window statuses of the plurality of application windows based on the window information of the plurality of application windows and according to a filter rule, where the window statuses include an invisible state, and an application window that meets the filter rule is in the invisible state; and performing GPU suppression on at least one first application or first process based on the window statuses of the plurality of application windows, where all application windows corresponding to the first application are in the invisible state, or all application windows corresponding to the first process are in the invisible state.

In this way, once the application window changes, the electronic device determines the application window that is invisible to a user. When all the windows of the first application are invisible to the user, GPU suppression is performed on the first application, or when all the windows of the first process are invisible to the user, GPU suppression is performed on the first process. This can effectively prevent the application or the process from occupying resources of the electronic device, and reduce a resource waste, thereby resolving application stuttering.

In some possible implementations, the plurality of application windows may include at least one first window and at least one second window. The first window is in the invisible state, and the at least one second window is a window other than all first windows in the plurality of application windows. Before the performing GPU suppression on at least one first application or first process, the method may further include: obtaining at least one third window based on window information of at least two second windows, where the third window is a window completely blocked by at least one of the at least two second windows; and determining that the third window is in the invisible state. In this way, the electronic device can further filter out the blocked window in the at least two second windows, to further reduce the resource waste.

In a specific possible implementation, the obtaining at least one third window based on window information of at least two second windows may be specifically: determining, based on the window information of the at least two second windows, an arrangement order of the at least two second windows in a direction that is perpendicular to a display and in which light is emitted from the display; determining, based on the window information and the arrangement order of the at least two second windows, that an orthographic projection of a first target application window is in a range of a second target application window, and the first target application window is arranged after the second target application window; and determining the first target application window as the third window.

In a specific possible implementation, a first filter rule includes at least one of the following: a window located outside an area of a desktop window, a window whose size is less than or equal to a first threshold, a shadow window of one window in the plurality of application windows, a window whose attribute is a target attribute, or a window whose attribute is an owned-window attribute and whose display range does not exceed a display range of an owner window.

In a specific possible implementation, the target attribute may include at least one of a hiding attribute, an invisibleness attribute, a transparency attribute, and a child-window attribute.

In some possible implementations, the method may further include: canceling GPU suppression on the first process or the first application when it is detected that at least one window of the first application or the first process is switched to a preview window.

In some possible implementations, the method may further include: minimizing all application windows that are in the invisible state. In this way, consumption of the resources (for example, resources of a graphics processing unit) of the electronic device is significantly reduced. Consequently, resource consumption of the electronic device is reduced.

This embodiment of this application and the foregoing embodiment may be two parallel technical solutions, or the foregoing embodiment may be further limited by this embodiment. This is not specifically limited in embodiments of this application.

In a specific possible implementation, that the at least one application window changes includes at least one of the following: A location of the at least one application window changes, a status of the at least one application window changes, and a size of the at least one window changes.

According to a second aspect, an embodiment of this application provides an application suppression apparatus, used in an electronic device. The electronic device may include a plurality of application windows. The apparatus may include: a monitoring unit, configured to monitor the plurality of application windows; a traversing unit, configured to traverse window information of the plurality of application windows when it is detected that at least one application window in the plurality of application windows changes; a first obtaining unit, configured to obtain window statuses of the plurality of application windows based on the window information of the plurality of application windows and according to a filter rule, where the window statuses include an invisible state, and an application window that meets the filter rule is in the invisible state; and a suppression unit, configured to perform GPU suppression on at least one first application or first process based on the window statuses of the plurality of application windows. All application windows corresponding to the first application are in the invisible state, or all application windows corresponding to the first process are in the invisible state.

In this way, once the application window changes, the electronic device determines the application window that is invisible to a user. When all the windows of the first application are invisible to the user, GPU suppression is performed on the first application, or when all the windows of the first process are invisible to the user, GPU suppression is performed on the first process. This can effectively prevent the application or the process from occupying resources of the electronic device, and reduce a resource waste, thereby resolving application stuttering.

In some possible implementations, the plurality of application windows may include at least one first window and at least one second window. The first window is in the invisible state, and the at least one second window is a window other than all first windows in the plurality of application windows. The apparatus may further include: a second obtaining unit, configured to obtain at least one third window based on window information of at least two second windows, where the third window is a window that is completely blocked by at least one of the at least two second windows; and a first determining unit, configured to determine that the third window is in the invisible state. In this way, the electronic device can further filter out the blocked window in the at least two second windows, to further reduce the resource waste.

In a specific possible implementation, the second obtaining unit is further configured to: determine, based on the window information of the at least two second windows, an arrangement order of the at least two second windows in a direction that is perpendicular to a display and in which light is emitted from the display; determine, based on the window information and the arrangement order of the at least two second windows, that an orthographic projection of a first target application window is in a range of a second target application window, and the first target application window is arranged after the second target application window; and determine the first target application window as the third window.

In a specific possible implementation, a first filter rule includes at least one of the following: a window located outside an area of a desktop window, a window whose size is less than or equal to a first threshold, a shadow window of one window in the plurality of application windows, a window whose attribute is a target attribute, or a window whose attribute is an owned-window attribute and whose display range does not exceed a display range of an owner window.

In a specific possible implementation, the target attribute may include at least one of a hiding attribute, an invisibleness attribute, a transparency attribute, and a child-window attribute.

In some possible implementations, the apparatus may further include a canceling unit, configured to cancel GPU suppression on the first process or the first application when it is detected that at least one window of the first application or the first process is switched to a preview window.

In some possible implementations, the apparatus may further include a processing unit, configured to minimize all application windows that are in the invisible state. In this way, consumption of resources (for example, resources of a graphics processing unit) of the electronic device is significantly reduced. Consequently, resource consumption of the electronic device is reduced.

In a specific possible implementation, that the at least one application window changes includes at least one of the following: A location of the at least one application window changes, a status of the at least one application window changes, and a size of the at least one window changes.

According to a third aspect, an embodiment of this application provides an electronic device. The electronic device includes one or more processors and a memory. The memory stores code. When the code is executed by the one or more processors, the electronic device is enabled to perform the method according to the first aspect.

According to a fourth aspect, an embodiment of this application provides a chip system. The chip system is used in an electronic device. The chip system includes one or more interface circuits and one or more processors. The interface circuit and the processor are interconnected through a line. The interface circuit is configured to: receive a signal from a memory of the electronic device, and send the signal to the processor. The signal includes computer instructions stored in the memory. When the processor executes the computer instructions, the electronic device is enabled to perform the method according to the first aspect.

According to a fifth aspect, an embodiment of this application provides a computer-readable storage medium, including computer instructions. When the computer instructions are run on an electronic device, the electronic device is enabled to perform the method according to the first aspect.

According to a sixth aspect, an embodiment of this application provides a computer program product. When the computer program product runs on a computer, the computer is enabled to perform the method according to the first aspect.

For specific implementations and corresponding technical effects of the embodiments of the second aspect to the sixth aspect, refer to the specific implementations and technical effects of the first aspect.

In embodiments of this application, the electronic device monitors the plurality of application windows. The electronic device traverses window information of the plurality of application windows when detecting that the at least one application window in the plurality of application windows changes. The electronic device obtains the window statuses of the plurality of application windows based on the window information of the plurality of application windows and according to the filter rule. The window statuses include the invisible state, and the application window that meets the filter rule is in the invisible state. The electronic device performs GPU suppression on the at least one first application or first process based on the window statuses of the plurality of application windows. All the application windows corresponding to the first application are in the invisible state, or all the application windows corresponding to the first process are in the invisible state. In this way, once the application window changes, the electronic device determines the application window that is invisible to the user. When all the windows of the first application are invisible to the user, GPU suppression is performed on the first application, or when all the windows of the first process are invisible to the user, GPU suppression is performed on the first process. This can effectively prevent the application or the process from occupying the resources of the electronic device, and reduce the resource waste, thereby resolving application stuttering.

### BRIEF DESCRIPTION OF DRAWINGS

FIG. 1 is a schematic diagram of a structure of an electronic device according to an embodiment of this application;
FIG. 2 is a schematic diagram of a software architecture of an electronic device according to an embodiment of this application;
FIG. 3A to FIG. 3C are a schematic flowchart of an application suppression method according to an embodiment of this application;
FIG. 4 is a schematic flowchart of window monitoring according to an embodiment of this application;
FIG. 5 is a schematic flowchart of an application scenario of an application suppression method according to an embodiment of this application;
FIG. 6 is a schematic flowchart of an application scenario of an application suppression method according to an embodiment of this application;
FIG. 7 is a schematic diagram of an interface of an electronic device according to an embodiment of this application; and
FIG. 8 is a schematic diagram of an interface of an electronic device according to an embodiment of this application.

### DESCRIPTION OF EMBODIMENTS

The terms "first" and "second" mentioned below are merely intended for a purpose of description, and shall not be understood as an indication or implication of relative importance or implicit indication of the quantity of indicated technical features. Therefore, a feature limited by "first" or "second" may explicitly or implicitly include one or more features. In descriptions of embodiments, unless otherwise specified, "a plurality of" means two or more than two.

Process Lasso (process lasso, Pro for short) is a unique systematic tool for debugging a process level, and has a main function of dynamically adjusting a priority of each process based on a special algorithm of Process Lasso, to reduce a system load. A current application suppression method is usually as follows: An electronic device starts Pro. The electronic device displays an interface of Pro. After a user selects an "Enable ProBalance (process CPU usage balance) option on a main menu interface of Pro displayed on the electronic device, the electronic device identifies a first application that occupies excessive computer resources, and adjusts a priority of a process of the first application by using Pro, to reduce application stuttering. However, the electronic device only finds the first application based on CPU utilization and adjusts the priority of the process of the first application. If the first application is invisible to the user, the first application still occupies the resources of the electronic device, and application stuttering still exists.

To resolve the foregoing technical problem, in embodiments of this application, an electronic device monitors a plurality of application windows. The electronic device traverses window information of the plurality of application windows when detecting that at least one application window in the plurality of application windows changes. The electronic device obtains window statuses of the plurality of application windows based on the window information of the plurality of application windows and according to a filter rule. The window statuses include an invisible state, and an application window that meets the filter rule is in the invisible state. The electronic device performs graphics processing unit (graphics processing unit, GPU) suppression on at least one first application or first process based on the window statuses of the plurality of application windows. All application windows corresponding to the first application are in the invisible state, or all application windows corresponding to the first process are in the invisible state. In this way, once the application window changes, the electronic device determines the application window that is invisible to the user. When all the windows of the first application are invisible to the user, GPU suppression is performed on the first application, or when all the windows of the first process are invisible to the user, GPU suppression is performed on the first process. This can effectively prevent the application or the process from occupying resources of the electronic device, and reduce resource waste, thereby resolving application stuttering.

In some embodiments, the electronic device may further minimize all application windows that are in the invisible state. In this way, all the application windows are minimized, so that consumption of resources (for example, resources of a graphics processing unit) of the electronic device is significantly reduced. Consequently, resource consumption of the electronic device is reduced. Optionally, that GPU suppression is performed on the first application or GPU suppression is performed on the first process may alternatively be replaced with the follows: All the application windows corresponding to the first application or the first process are minimized, or all application windows that are in the invisible state are minimized.

In some embodiments, that the electronic device performs GPU suppression on the first application may be specifically: The electronic device suppresses a process of the first application. For example, the electronic device suppresses a rendering process of the first application. This effectively reduces rendering and synthesis operations on an application that is invisible to a user, and reduce resource consumption of the graphics processing unit, thereby reducing a resource waste.

Certainly, in some embodiments, the electronic device may further perform optimization processing on resources of a hardware unit corresponding to the first application. For example, the electronic device clears a cache of the first application in a memory, or the electronic device indicates the graphics processing unit to release resources occupied by the first application. In this way, the electronic device can prevent an application that is invisible to the user from occupying excessive resources, to reduce a resource waste. Consequently, an application that is visible to the user can obtain more resources to reduce stuttering of the application that is visible to the user. In addition, this can effectively reduce heat generation of the entire electronic device, and reduce noise.

In some embodiments, after filtering out the window that is in the invisible state, the electronic device may further filter a remaining window, to filter out a completely blocked window. Specifically, the plurality of application windows may include at least one first window and at least one second window. The first window is a window that is in the invisible state and that is determined according to the filter rule. The at least one second window is a window other than all first windows in the plurality of application windows. Before that the electronic device performs GPU suppression on at least one first application or first process, the method may further include: The electronic device obtains at least one third window based on window information of at least two second windows, where the third window is a window that is completely blocked by at least one of the at least two second windows; and the electronic device determines that the third window is in the invisible state. In this way, the electronic device can further filter out the blocked window in the at least two second windows, to further reduce the resource waste.

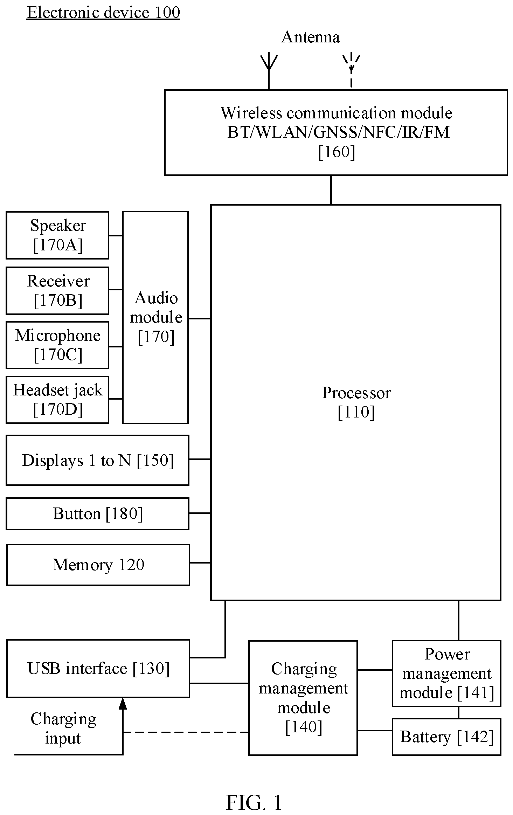

FIG. 1 is a block diagram of a structure of the electronic device.

As shown in FIG. 1, the electronic device 100 may include a processor 110, a memory 120, a universal serial bus (universal serial bus, USB) interface 130, a charging management module 140, a power management module 141, a battery 142, an antenna, a wireless communication module 160, an audio module 170, a speaker 170A, a receiver 170B, a microphone 170C, a headset jack 170D, a button 180, a display 150, and the like.

It may be understood that the structure shown in this embodiment of this application does not constitute a specific limitation on the electronic device 100. In some other embodiments of this application, the electronic device 100 may include more or fewer components than those shown in the figure, or combine some of components, or split some of the components, or have different arrangements of the component. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on an instruction operation code and a time sequence signal, to complete control of instruction fetching and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor may directly invoke the instructions or the data from the memory. This avoids repeated access, and reduces waiting time of the processor 110, thereby improving system efficiency.

In some embodiments, the processor 110 may include one or more interfaces. The interface may include an inter-integrated circuit (inter-integrated circuit, I1C) interface, an inter-integrated circuit sound (inter-integrated circuit sound, IIS) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that an interface connection relationship between the modules that is shown in embodiments of the present invention is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from a charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. When charging the battery 142, the charging management module 140 may further supply power to the electronic device by using the power management module 141.

The power management module 141 is configured to connect to the battery 142, the charging management module 140, and the processor 110. The power management module 141 receives an input from the battery 142 and/or an input of the charging management module 140, and supplies power to the processor 110, the memory 120, the display 150, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the electronic device 100 may be implemented by using the antenna, the wireless communication module 160, the modem processor, the baseband processor, and the like.

The antenna is configured to transmit and receive electromagnetic wave signals. Each antenna in the electronic device 100 may be configured to cover one or more communication frequency bands. Different antennas may be further multiplexed to improve antenna utilization. For example, the antenna may be multiplexed as a diversity antenna in a wireless local area network. In some other embodiments, the antenna may be used in combination with a tuning switch.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker 170A, the receiver 170B, or the like), or displays an image or a video by the display 150. In some embodiments, the modem processor may be an independent component. In some other embodiments, the modem processor may be independent of the processor 110, or is disposed in a same component as another functional module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more components integrating at least one communication processing module. The wireless communication module 160 receives an electromagnetic wave through the antenna, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave for radiation through the antenna.

In some embodiments, in the electronic device 100, the antenna is coupled to the wireless communication module 160, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 implements a display function by using the GPU, the display 150, the application processor, and the like. The GPU is a microprocessor for image processing, and is connected to the display 150 and the application processor. The GPU is configured to: perform mathematical and geometric computation, and render an image. The processor 110 may include one or more GPUs, which execute program instructions to generate or change display information.

The display 150 is configured to display an image, a video, and the like. The display 150 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 150, where N is a positive integer greater than 1. In some embodiments, the display 150 displays a plurality of application windows.

The electronic device 100 may implement a photographing function by using the ISP, a camera, the video codec, the GPU, the display 150, the application processor, and the like.

The ISP is configured to process data fed back by the camera. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera.

The camera is configured to capture a static image or a video. An optical image of an object is generated through the lens, and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The light-sensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the electronic device 100 may include one or N cameras, where N is a positive integer greater than 1.

The digital signal processor is configured to process a digital signal, and may further process another digital signal in addition to the digital image signal. For example, when the electronic device 100 selects a frequency, the digital signal processor is configured to perform Fourier transform on frequency energy.

The video codec is configured to compress or decompress a digital video. The electronic device 100 may support one or more video codecs. In this way, the electronic device 100 can play or record videos in a plurality of encoding formats such as moving picture experts group (moving picture experts group, MPEG)-1, MPEG-1, MPEG-3, and MPEG-4.

The NPU is a neural-network (neural-network, NN) computing processor, quickly processes input information by referring to a structure of a biological neural network, for example, by referring to a mode of transmission between human brain neurons, and may further continuously perform self-learning. Applications such as intelligent cognition of the electronic device 100 may be implemented through the NPU, for example, image recognition, facial recognition, speech recognition, and text understanding.

The memory 120 may be configured to store computer-executable program code. The executable program code includes instructions. The memory 120 may include a program storage area and a data storage area. The program storage area may store an operating system, an application required by at least one function (for example, a voice playing function or an image playing function), and the like. The data storage area may store data (such as audio data and a phone book) created during use of the electronic device 100, and the like. In addition, the memory 120 may include a high-speed random access memory, and may further include a non-volatile memory, for example, at least one magnetic disk storage component, a flash memory component, or a universal flash storage (universal flash storage, UFS). The processor 110 runs the instructions stored in the memory 120 and/or the instructions stored in the memory disposed in the processor to perform various function applications and data processing of the electronic device 100.

The electronic device 100 may implement an audio function by using the audio module 170, the speaker 170A, the receiver 170B, the microphone 170C, the headset jack 170D, the application processor, for example, music playing and sound recording.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some functional modules of the audio module 170 are disposed in the processor 110.

The speaker 170A, also referred to as a "loudspeaker", is configured to convert an electrical audio signal into a sound signal. The electronic device 100 may be configured to listen to music or answer a call in a hands-free mode over the speaker 170A.

The receiver 170B, also referred to as an "earpiece", is configured to convert an electrical audio signal into a sound signal. When a call is answered or speech information is received through the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, so as to implement a directional recording function and the like.

The headset jack 170D is configured to connect to a wired headset. The headset jack 170D may be a USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The button 180 includes a power button, a volume button, and the like. The button 180 may be a mechanical button, or may be a touch button. The electronic device 100 may receive a button input, and generate a button signal input related to a user setting and function control of the electronic device 100.

Certainly, the electronic device 100 may further include another functional unit. This is not limited in embodiments of this application.

It should be noted that the electronic device 100 may be a desktop computer, a portable computer, a network server, a tablet computer, a wireless electronic device, an embedded device, a chip system, or a device having a structure similar to that in FIG. 1. In addition, the composition structure shown in FIG. 1 does not constitute a limitation on the electronic device. In addition to the components shown in FIG. 1, the electronic device may include more or fewer components than those shown in the figure, or combine some of the components, or have different arrangements of the components.

In an embodiment of this application, the chip system may include a chip, or may include a chip and another discrete component.

A software system of the electronic device 100 may use a layered architecture, an event-driven architecture, a microkernel architecture, a micro service architecture, or a cloud architecture. In embodiments of the present invention, a Windows system of a layered architecture is used as an example to illustrate the software structure of the electronic device 100.

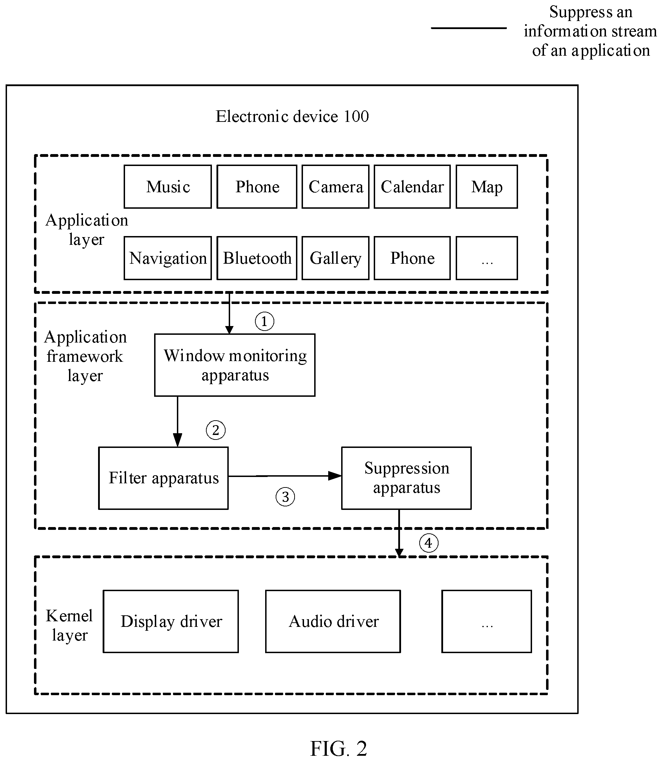

FIG. 2 is a block diagram of the software structure of the electronic device 100 according to an embodiment of this application.

In the layered architecture, software is divided into several layers. Each layer has a clear role and task. The layers communicate with each other through a software interface. In some embodiments, the Windows system may be divided into three layers: an application layer, an application framework layer, and a kernel layer from top to bottom.

The application layer may include a series of application packages.

As shown in FIG. 2, an application package may include applications such as Camera, Gallery, Calendar, Phone, Map, Navigation, WLAN, Bluetooth, Music, Videos, and Messaging.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like. Certainly, the application framework layer may further include a window monitoring apparatus, a filter apparatus, and a suppression apparatus.

The window manager is used to manage a window program. The window manager may obtain a size of the display, determine whether there is a status bar, perform screen locking, take a screenshot, and the like.

The content provider is used to store and obtain data, and enable the data to be accessed by an application. The data may include a video, an image, an audio, calls that are made and answered, a browsing history and a bookmark, a phone book, and the like.

The view system includes visual controls such as a control for displaying a text and a control for displaying an image. The view system may be used to construct an application. A display interface may include one or more views. For example, a display interface including an SMS message notification icon may include a text display view and an image display view.

The phone manager is used to provide a communication function of the electronic device 100, for example, management of a call status (including answering or declining).

The resource manager provides various resources such as a localized character string, an icon, an image, a layout file, and a video file for an application.

The notification manager enables an application to display notification information in the status bar, and may be used to convey a notification message. The notification manager may automatically disappear after a short stay, without requiring user interaction. For example, the notification manager is used to notify download completion and provide a message notification. The notification manager may alternatively be a notification that appears in a top status bar of the system in a form of a graph or a scroll bar text, for example, a notification of an application that is run in the background, or may be a notification that appears on a screen in a form of a dialog window. For example, text information is displayed in the status bar, an announcement is given, the electronic device vibrates, or an indicator light blinks.

The window monitoring apparatus is used to monitor window information of an application, and send a notification message to the filter apparatus when detecting that a window changes. The notification message is used to notify the filter apparatus to perform window filtering.

The filter apparatus is used to filter out, based on the notification message sent by the window monitoring apparatus, a window invisible to the user, and notify the suppression apparatus of the window invisible to the user. Certainly, the filter apparatus may be further used to notify the suppression apparatus of a first application or a first process. All windows of the first application are windows invisible to the user, or all windows of the first process are windows invisible to the user. Invisibleness to the user may be understood as invisibleness to the user with a naked eye.

The suppression apparatus is used to perform a suppression operation on the first application or the first process. Specifically, the suppression apparatus may be used to perform GPU suppression on the first application or the first process.

The kernel layer is a layer between hardware and software. The kernel layer includes at least a display driver, a camera driver, an audio driver, and a sensor driver.

The following describes an example of a working procedure of software and hardware of the electronic device 100 with reference to a scenario in which the first application is suppressed.
① The window monitoring apparatus at the application architecture layer monitors an application window at the application layer. ② When the window monitoring apparatus detects that the application window changes, the window monitoring apparatus sends to the filter apparatus, a notification message indicating that the application window changes. ③ The filter apparatus filters out, based on the notification message, a window invisible to the user, and sends information (for example, identifier information or an API) of the window to the suppression apparatus. ④ The suppression apparatus performs a suppression operation on the first application (all windows of the first application are windows invisible to the user) or the first process (all windows of the first process are windows invisible to the user). For example, the suppression apparatus invokes an API of the first application, runs a hook function loaded on the API, and then invokes the kernel layer to suppress starting of the display driver, starting of the audio driver, and playing of an audio by using the audio module 170.

In addition, actions, terms, and the like in embodiments of this application may be mutually referenced. This is not limited. In embodiments of this application, names of messages exchanged between devices, names of parameters in the messages, or the like are merely examples. Other names may alternatively be used during specific implementation. This is not limited.

An application suppression method provided in embodiments of this application may be executed by an electronic device. In embodiments of this application, an example in which a Windows operating system is installed on the electronic device is used for description.

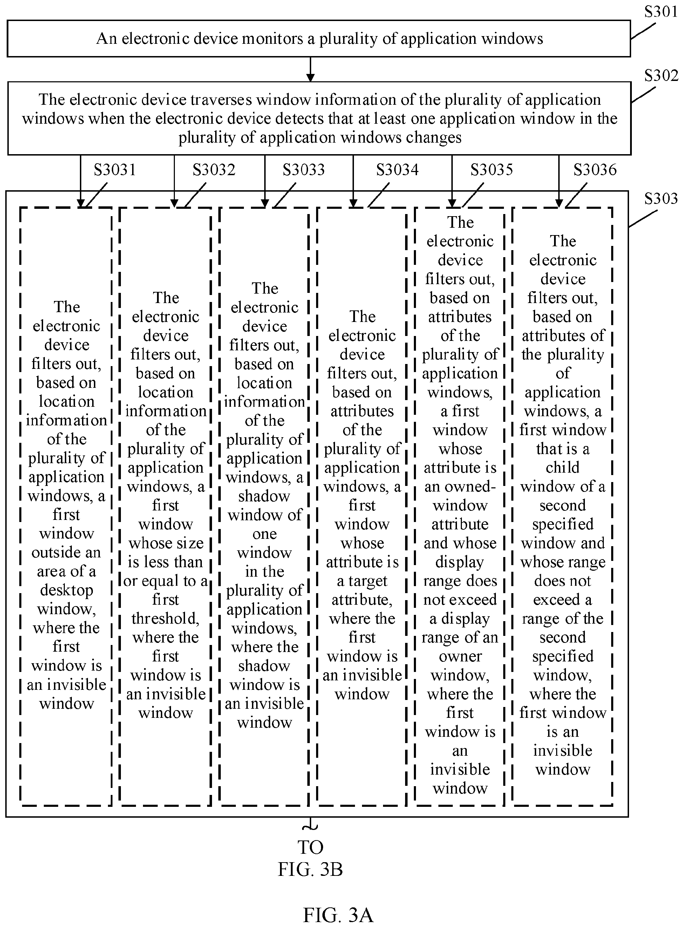

FIG. 3A to FIG. 3C are a schematic flowchart of an application suppression method according to an embodiment of this application. As shown in FIG. 3A to FIG. 3C, the method may include the following steps.

S301: An electronic device monitors a plurality of application windows.

In a specific possible implementation, a window monitoring apparatus of the electronic device monitors the plurality of application windows.

The window monitoring apparatus may include one window monitoring unit. The window monitoring unit is configured to monitor the plurality of application windows. In other words, a plurality of applications correspond to one window monitoring unit.

Certainly, the window monitoring apparatus may alternatively include a plurality of window monitoring units, and the plurality of window monitoring units are in a one-to-one correspondence with a plurality of applications. In other words, each application has one window monitoring unit corresponding to the application. The window monitoring apparatus is used to collect monitoring results of all the window monitoring units. The monitoring result may include that a window changes, a window does not change, or the like. That the window changes may include window minimization, window maximization, window restoration, window movement, and the like.

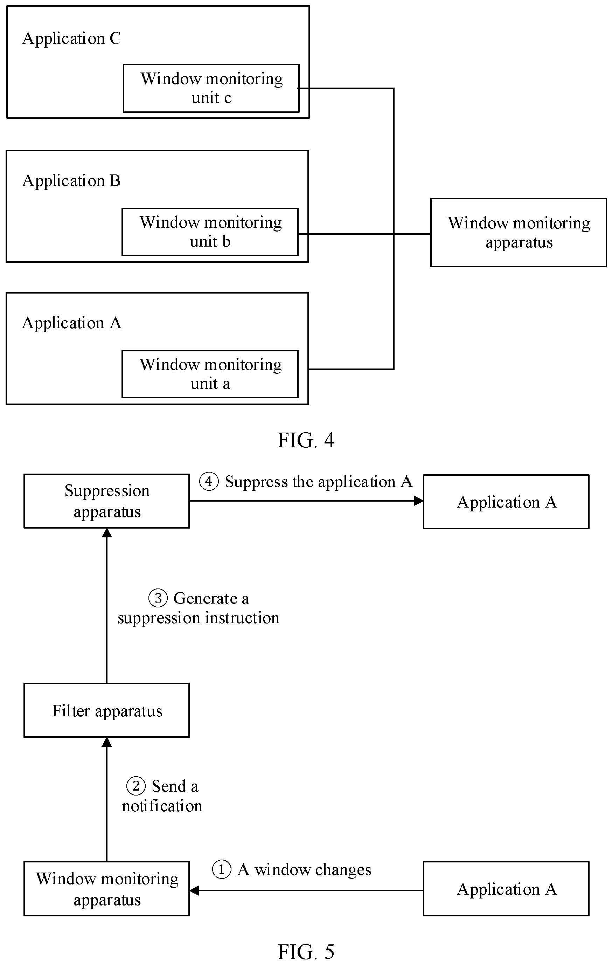

For example, as shown in FIG. 4, it is assumed that the plurality of applications may include an application A, an application B, and an application C. Correspondingly, the window monitoring apparatus may include a window monitoring unit a, a window monitoring unit b, and a window monitoring unit c. The window monitoring unit a is used to monitor a window of the application A. The window monitoring unit b is used to monitor a window of the application B. The window monitoring unit c is used to monitor a window of the application C. The window monitoring apparatus collects monitoring results of the window monitoring unit a, the window monitoring unit b, and the window monitoring unit c.

The window monitoring apparatus collects the monitoring results of the window monitoring units, to determine a notification policy based on different monitoring results. Details are as follows.

Example 1: The window monitoring apparatus may send a notification message in real time when there is window maximization or window minimization in the monitoring result collected by the window monitoring apparatus. In embodiments of this application, the window monitoring apparatus can send the notification message in real time based on the collected monitoring results of the window monitoring units. In other words, a window change can be monitored in real time. When detecting that the window is maximized or minimized, the window monitoring apparatus sends the notification message. In this way, the suppression policy is switched in real time, and user experience is not affected. This ensures that an image is usually normally played in a visible window viewed by the user.

Example 2: The window monitoring apparatus may send a notification message at a preset time interval when there is window drag in the monitoring result collected by the window monitoring apparatus. The preset time interval may be 0.1 second to 1.5 seconds. Specifically, the window monitoring apparatus may send a notification message every second. In embodiments of this application, the window monitoring apparatus can send the notification message at the preset time interval based on the collected monitoring results of the window monitoring units, without frequently starting the following operation of traversing information about the plurality of application windows. This reduces power consumption of the electronic device.

In the Windows operating system, one application may usually have dozens or even hundreds of windows. Because different attributes, location information, sizes, and the like are set for these windows, only a few windows or a dozen windows are invisible to a user. Therefore, in the Windows operating system, the windows need to be filtered, to filter out windows invisible to the user. Specifically, refer to S302 to S304 and S3041 to S3044.

S302: The electronic device traverses the window information of the plurality of application windows when the electronic device detects that at least one application window in the plurality of application windows changes.

That the window changes may be understood as that window information change. The window information may include location information of the window, status information of the window, and the like. Each application window corresponds to one piece of window information. The location information of the window may be understood as a display location of the window on a display. The status information of the window may be understood as that the window is maximized or minimized. An operation that causes the window to change may include an operation like window drag, window maximization, window minimization, or window restoration.

In a specific possible implementation, as shown in FIG. 5: ① The window monitoring apparatus of the electronic device receives a monitoring result sent by each window monitoring unit, and detects that the at least one application window (for example, a window of the application A shown in FIG. 5) in the plurality of application windows changes. ② The window monitoring apparatus of the electronic device sends a notification message to the filter apparatus of the electronic device. The notification message indicates that the application window changes, and indicates the filter apparatus to perform a filtering operation. The filter apparatus of the electronic device traverses window information of each application window in the plurality of application windows. Optionally, the electronic device traverses the window information of all the application windows.

S303: The electronic device obtains window statuses of the plurality of application windows based on the window information of the plurality of application windows and according to a filter rule. The window statuses include an invisible state, and an application window that meets the filter rule is in the invisible state.

Each of the plurality of applications has a plurality of windows. Therefore, the window information of the plurality of application windows herein should be understood as information about the plurality of windows of each of the plurality of applications, or may be understood as information about all windows of each of the plurality of applications.

In addition to the foregoing location information and status information, the window information may further include a window attribute.

For example, the window attribute may include a hiding attribute, an invisibleness attribute, a tool-window attribute, a child-window attribute, and a transparency attribute. That a window has the hiding attribute or the invisibleness attribute may mean that the window is invisible to the user. That a window has the tool-window attribute or the child-window attribute may mean that the window is attached to another window and does not exceed a range of the window to which the window is attached. That a window has the transparency attribute may mean that the window cannot block another window.

The filter rule may include at least one or more of the following:
(1) a window located outside an area of a desktop window;
(2) a window whose size is less than or equal to a first threshold;
(3) a shadow window of one window in the plurality of application windows;
(4) a window whose attribute is a target attribute; or
(5) a window whose attribute is an owned-window attribute and whose display range does not exceed a display range of an owner window.

The target attribute may include at least one of the hiding attribute, the invisibleness attribute, the transparency attribute, and the child-window attribute.

The plurality of application windows may include at least one first window and at least one second window. The window statuses of the plurality of application windows may include a visible state and the invisible state. For example, the first window is a window that is in the invisible state and that is obtained according to the filter rule. The at least one second window is a window other than all first windows in the plurality of application windows. In other words, the second window does not meet any item in the filter rule.

For example, for different content included in the window information and different filter rules, implementations of S303 are also different. A specific implementation may include one or more of the following:
Implementation 1: The window information includes the location information, and the filter rule includes the window located outside the area of the desktop window.

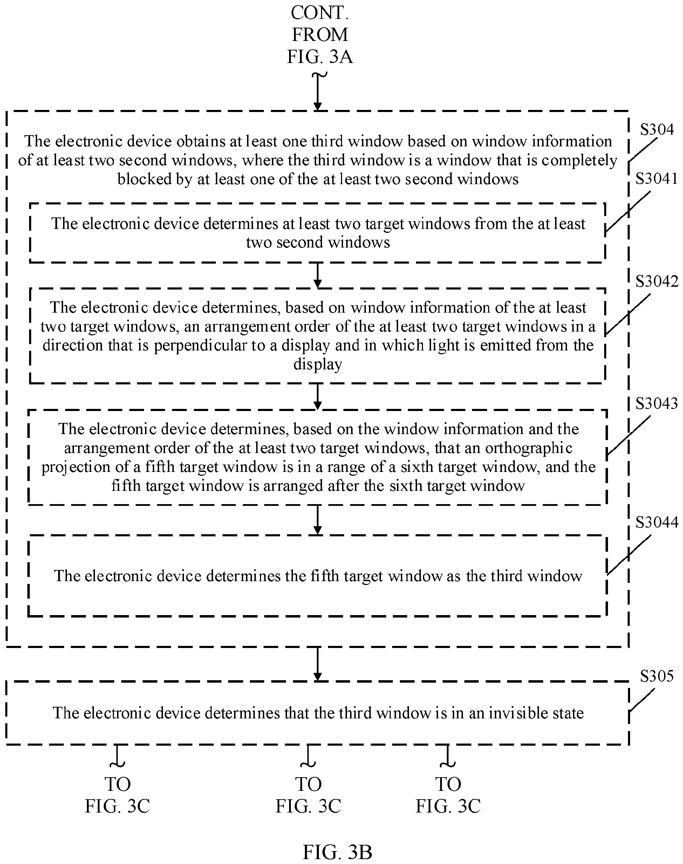

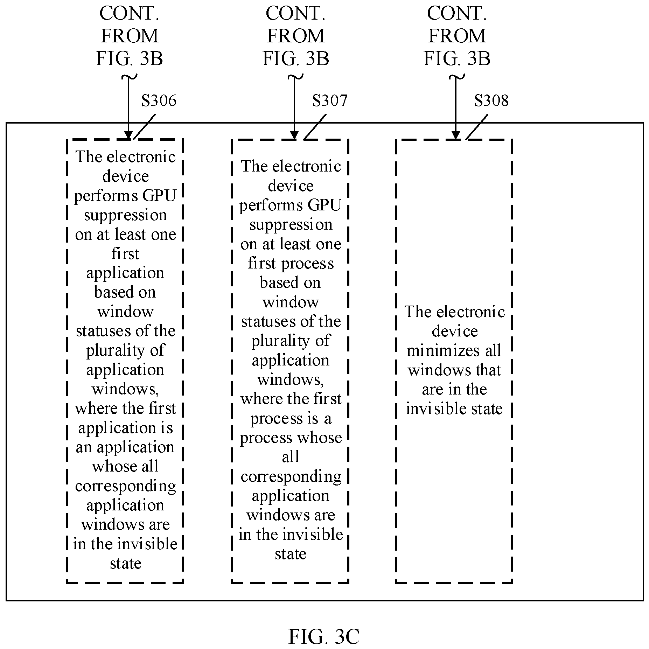

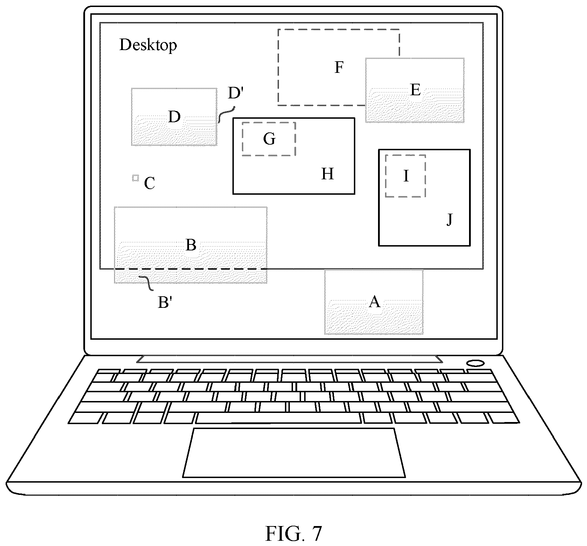

In a specific possible implementation, with reference to FIG. 3Ato FIG. 3C, S303 may specifically include S3031: The electronic device filters out, based on location information of the plurality of application windows, a first window outside the area of the desktop window, that is, the first window is an invisible window. For example, as shown in FIG. 7, a window A is located outside the area of the desktop window. In this case, the window A is an invisible window. Therefore, the window A is filtered out.

Implementation 2: The window information includes the location information, and the filter rule includes the window whose size is less than or equal to the first threshold.

In a specific possible implementation, with reference to FIG. 3Ato FIG. 3C, S303 may be specifically implemented as follows. S3032: The electronic device filters out, based on location information of the plurality of application windows, a first window whose size is less than or equal to the first threshold. In other words, the first window is an invisible window. The first threshold indicates a size invisible to the user with a naked eye. For example, the first threshold is a value indicating a pixel level. For example, as shown in FIG. 7, a size of a window C is only a pixel-level size. In this case, the window C is an invisible window. Therefore, the window C is filtered out.

Implementation 3: The window information includes the location information, and the filter rule includes the shadow window of the window in the plurality of application windows.

In a specific possible implementation, with reference to FIG. 3Ato FIG. 3C, S303 may be specifically implemented as follows. S3033: The electronic device filters out, based on location information of the plurality of application windows, a shadow window in the plurality of application windows. The shadow window is an invisible window. For example, the first window is a shadow window of the second window. In this case, the first window is an invisible window. For example, a second window D and a shadow window D' of the second window D are shown in FIG. 7. To be specific, the shadow window D' is the first window. In this case, the window D' is an invisible window.

Implementation 4: The window information includes the window attribute, and the filter rule includes the window whose attribute is the target attribute.

In a specific possible implementation, with reference to FIG. 3Ato FIG. 3C, S303 may be specifically implemented as follows. S3034: The electronic device filters out, based on attributes of the plurality of application windows, a first window whose attribute is the target attribute, that is, the first window is an invisible window.

The target attribute may include at least one of the hiding attribute, the invisibleness attribute, the transparency attribute, and the child-window attribute.

That is, the electronic device filters out a first window whose attribute is the hiding attribute, that is, the first window is an invisible window. Alternatively, the electronic device filters out a first window whose attribute is the invisibleness attribute, that is, the first window is an invisible window. Alternatively, the electronic device filters out a first window whose attribute is the transparency attribute, that is, the first window is an invisible window. Alternatively, the electronic device filters out a first window whose attribute is the child-window attribute, that is, the first window is an invisible window.

Implementation 5: The window information includes the window attribute, and the filter rule includes the window whose attribute is the owned-window attribute and whose display range does not exceed the display range of the owner window.

In a specific possible implementation, with reference to FIG. 3Ato FIG. 3C, S303 may be specifically implemented as follows. S3035: The electronic device filters out, based on attributes of the plurality of application windows, a first window whose attribute is the owned-window attribute and whose display range does not exceed the display range of the owner window, that is, the first window is an invisible window.

It is assumed that a first specified window is an owner window, and the first window is an owned window. That a range of the first window does not exceed a range of the first specified window may be understood as that the first window is located in an area of the first specified window. For example, a first window G and a first specified window H are shown in FIG. 7. The first window G is owned by the first specified window H, and the first window G is in an area of the first specified window H. In this case, the first window G is an invisible window. Therefore, the first window G is filtered out.

In another specific possible implementation, with reference to FIG. 3A to FIG. 3C, S303 may be specifically implemented as follows. S3036: The electronic device filters out, based on attributes of the plurality of application windows, a first window that is a child window of a second specified window and whose range does not exceed a range of the second specified window. In this case, the first window is an invisible window.

For example, a first window I and a second specified window J are shown in FIG. 7. The first window I and the second specified window J are in a subordinate relationship. The first window I is a child window of the second specified window J, and the second specified window J is a parent window of the first window I. The first window I is in an area of the second specified window J. In this case, the first window I is an invisible window.

In some embodiments, after filtering out the window that is in the invisible state, the electronic device may further filter a remaining window, to filter out a completely blocked window. Details are as follows.

After S303 is performed, optionally, the application suppression method provided in embodiments of this application may further include the following steps.

S304: The electronic device obtains at least one third window based on window information of at least two second windows. The third window is a window that is completely blocked by at least one of the at least two second windows.

Complete blocking may be understood as: In a direction that is perpendicular to the display and in which light is emitted from the display, a range of a window arranged in the front covers a range of a window arranged in the rear. In this case, the window arranged in the rear is completely blocked by the window arranged in the front.

In a specific possible implementation, with reference to FIG. 3Ato FIG. 3C, S304 may be specifically implemented as follows.

S3041: The electronic device determines at least two target windows from the at least two second windows.

As described above, the window information may include the location information, the status information, the window attributes, and the like. For the different content included in the window information, implementations of S3041 are different. Details are as follows.

Implementation 1: The window information includes the location information.

In a specific possible implementation, S3041 may be specifically implemented as follows. S30411: The electronic device determines, based on location information of the at least two second windows, at least one second window whose first part is located outside the area of the desktop window. S30412: The electronic device crops the first part that is of the at least one second window and that is determined in S30411. S30413: The electronic device determines a cropped second window as a first target window. For example, as shown in FIG. 7, a first part B' of a window B is located outside the area of the desktop window. In this case, the electronic device crops the first part B' of the window B.

Implementation 2: The window information includes the window attribute.

In a specific possible implementation, S3041 may be specifically implemented as follows. S30411': The electronic device determines, based on attributes of the at least two second windows, at least one second window whose attribute is a parent window attribute. The second window whose attribute is the parent window attribute is a second target window. For example, a third specified window H and a fourth specified window G are shown in FIG. 7. The fourth specified window G and the third specified window H are in a subordinate relationship. The fourth specified window G is a child window of the third specified window H, and the third specified window H is a parent window of the fourth specified window G. The fourth specified window G is in an area of the third specified window H. In this case, the third specified window H is the second target window.

In another specific possible implementation, S3041 may be specifically implemented as follows. S30412': The electronic device determines, based on attributes of the at least two second windows, a third target window from the at least two second windows. The third target window is owned by a fourth target window, and a range of the third target window exceeds a range of the fourth target window. For example, a fifth specified window E and a sixth specified window F are shown in FIG. 7. The fifth specified window E is owned by the sixth specified window F, and an area of the fifth specified window E partially overlaps an area of the sixth specified window F. In this case, the fifth specified window E is the third target window.

It should be noted that S304 is used to determine a blocking relationship between the plurality of windows. Therefore, in S304, the at least two target windows are processed. If only one window remains after filtering, S304 and a subsequent related step do not need to be performed.

S3042: The electronic device determines, based on window information of the at least two target windows, an arrangement order of the at least two target windows in the direction that is perpendicular to the display and in which the light is emitted from the display.

As described above, the window information may include the location information of the application window.

S3042 may be specifically: The electronic device determines, based on location information of the at least two target windows, the arrangement order of the at least two target windows in the direction that is perpendicular to the display and in which the light is emitted from the display, that is, determines a window in the front in a Z-order and a window in the rear in the Z-order.

The Z-order indicates an order in which the windows are displayed on a screen. The window in the front in the Z-order blocks the window in the rear in the Z-order. When an area on the screen needs to be refreshed, in a same child window chain, a window in the front in the Z-order is refreshed first, and a window in the rear in the Z-order is refreshed later. For example, for windows in a parent/child relationship, a parent window is refreshed first, and a child window is refreshed later.

S3043: The electronic device determines, based on the window information and the arrangement order of the at least two target windows, that an orthographic projection of a fifth target window (for example, the first target application window) is in a range of a sixth target window (for example, the second target application window), and the fifth target window is arranged after the sixth target window.

As described above, when the range of the sixth target window in the front in the Z-order is greater than a range of the fifth target window in the rear in the Z-order, the electronic device may determine that the fifth target window is blocked by the sixth target window.

S3044: The electronic device determines the fifth target window as the third window.

When the electronic device determines that the fifth target window is blocked by the sixth target window, the electronic device determines the fifth target window as the third window, that is, the third window is an invisible window.

S305: The electronic device determines that the third window is in the invisible state.

In conclusion, the electronic device filters out, based on the information about the plurality of application windows, all windows that are invisible to the user. Subsequently, the electronic device performs a suppression operation. The suppression operation may include the following plurality of manners. Manner 1: The electronic device suppresses all invisible windows. Manner 2: The electronic device suppresses a first application (all windows of the first application are invisible windows). Manner 3: The electronic device suppresses a first process (all windows of the first process are invisible windows). Details are as follows.

### Manner 1

S306: The electronic device performs GPU suppression on at least one first application based on the window statuses of the plurality of application windows. The first application is an application whose all corresponding application windows are in the invisible state.

Specifically, as shown in FIG. 5: ③ After the filter apparatus of the electronic device determines all application windows that are in the invisible state, the filter apparatus sends a suppression instruction to a suppression apparatus of the electronic device. ④ The suppression apparatus performs a suppression operation on the first application or the first process according to the suppression instruction.

Specifically, the filter apparatus of the electronic device sends an interception notification to the suppression apparatus of the electronic device after the filter apparatus of the electronic device determines that all the windows of the first application are invisible windows, that is, determines that the first application is an invisible application. The suppression apparatus intercepts, based on the interception notification, a process instruction sent by a central processing unit (central processing unit, CPU) of the electronic device.

In a specific possible implementation, S306 is specifically: The electronic device suppresses a rendering process of the first application.

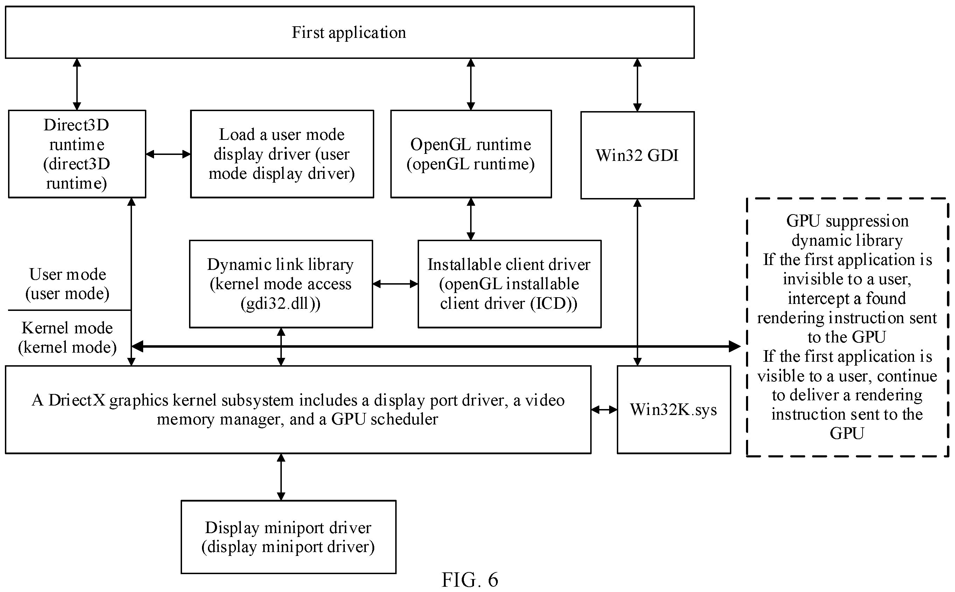

For example, as shown in FIG. 6, when the first application is started, the electronic device configures a graphics processing unit (graphics processing unit, GPU) suppression program for the first application. The filter apparatus of the electronic device sends an interception notification to the suppression apparatus of the electronic device. The interception notification carries an application programming interface (application programming interface, API) of the first application. The suppression apparatus intercepts, based on the interception notification, a rendering instruction that is sent by the CPU of the electronic device to the GPU and that is used for the first application, so that the CPU no longer notifies the GPU to perform the rendering action on the first application.

That the suppression apparatus intercepts, based on the interception notification, a rendering instruction that is sent by the CPU of the electronic device to the GPU and that is used for the first application may be specifically implemented as follows: A hook (hook) function is loaded on the API of the first application, and when the API is invoked, the electronic device first executes the hook function, to intercept the rendering instruction that is sent by the CPU of the electronic device to the GPU and that is used for the first application.

The hook function, also referred to as hooking (hooking) or referred to as hooking, is a computer programming term. The hook function covers various techniques used to alter or augment behavior of an operating system, an application, or another software component by intercepting a function call, a message, or an event passed between software modules.

In embodiments of this application, the suppression apparatus of the electronic device can be used in cooperation with the window monitoring apparatus and the filter apparatus, to optimize usage of resources of the GPU by the first application (namely, an application invisible to the user) in real time. This optimizes energy efficiency of the entire GPU. In addition, in an overall suppression process, an audio is still played normally. The overall optimization process is automatically performed without manual intervention by the user. In this way, no negative impact is caused on user experience.

### Manner 2

S307: The electronic device performs GPU suppression on at least one first process based on the window statuses of the plurality of application windows. The first process is a process whose all corresponding application windows are in the invisible state.

Specifically, as shown in FIG. 5: ③ After the filter apparatus of the electronic device determines that all the windows of the first process are invisible to the user, the filter apparatus sends a suppression instruction to the suppression apparatus of the electronic device. ④ The suppression apparatus performs the suppression operation on the first process according to the suppression instruction.

Specifically, the filter apparatus of the electronic device sends an interception instruction to the suppression apparatus of the electronic device after the filter apparatus of the electronic device determines that all the windows of the first process are invisible to the user. The suppression apparatus intercepts, based on the interception notification, a rendering instruction sent by a CPU of the electronic device. Accordingly, GPU suppression is performed on the first process. One application may include a plurality of processes. The first process may be one or more processes in the plurality of processes of the application.

### Manner 3

S308: The electronic device minimizes all windows that are in the invisible state.

For example, after the filter apparatus of the electronic device determines that the first application is an invisible application, the filter apparatus of the electronic device sends a processing notification to a processor of the electronic device. The processing notification carries an API of the first application. The processor of the electronic device invokes the API of the first application based on the processing notification. The electronic device performs an operation of minimizing the first application window.

In embodiments of this application, when receiving a minimization message, the electronic device can determine that the first application is invisible to the user, to optimize invocation of a graphic interface. This reduces consumption of the resources of the GPU.

Certainly, embodiments of this application may further include another suppression operation, for example, performing optimization processing on resources of a hardware unit of the electronic device. Details are as follows.

The hardware unit may include the CPU, a memory, or a disk. For different hardware, S3053 may be specifically implemented as follows.

For example, the hardware unit is the CPU.

Specifically, the following may be implemented. First, the electronic device adjusts a priority of a process and a priority of a thread of the first application. Second, the electronic device performs a core binding operation on the process of the application, for example, binds the first application to a few cores or an efficient core for running, and binds the following second application to a majority of cores or a performance core for running.

For example, the hardware unit is the memory.

Specifically, the following may be implemented. First, the electronic device adjusts a priority of the memory of an application, for example, reduces a priority of the memory of the first application. Second, the electronic device reclaims a working set of the memory of the application, for example, reclaim a working set of the first application, to ensure that memory of a foreground application is sufficient.

For example, the hardware unit is the disk.

Specifically, the following may be implemented. First, the electronic device adjusts an I/O priority of an application, for example, reduces an I/O priority of the first application. Second, the electronic device limits a network transmission speed of the first application, to ensure network traffic of a foreground application.

In embodiments of this application, the electronic device optimizes, based on whether the application is visible to the user, the resources of the hardware unit corresponding to the first application. This expands an optimization scenario.

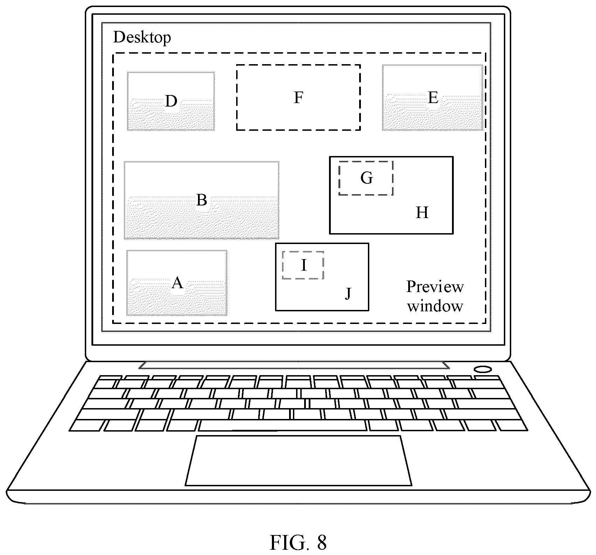

In addition, some special operations may change a window that is invisible to the user to a window that is visible to the user. The special operations may include switching a window by pressing Alt+Tab, clicking a "Task view" button on a Windows taskbar, and moving a mouse to the taskbar to automatically pop up a preview of a window. Certainly, the special operations may further include some system shortcut key operations. The special operations do not change a location of the application window, but change the application from being invisible to being visible to the user. That is, a preview window shown in FIG. 8 is displayed in the desktop window of the electronic device. The windows are arranged and displayed in the preview window.

Therefore, the method provided in embodiments of this application may further include: The electronic device cancels GPU suppression on the first process or the first application when detecting that at least one window of the first application or the first process is switched to a preview window. For example, the window monitoring apparatus of the electronic device detects that the at least one window is switched to the preview window. The window monitoring apparatus of the electronic device sends a notification message to the filter apparatus of the electronic device. The filter apparatus determines that the window is a window visible to the user. In other words, each window displayed in the window is also a window visible to the user. In this way, the first application or the first process corresponding to the window changes from being invisible to the user to being visible to the user. The filter apparatus of the electronic device sends an instruction to the suppression apparatus of the electronic device. The instruction indicates the suppression apparatus to cancel suppression on the first application or the first process. The suppression apparatus of the electronic device cancels suppression on the first application or the first process based on the instruction. It can be learned that, in embodiments of this application, the electronic device can monitor a change of the window status in real time, and support real-time policy switching, so that a background suppression measure is imperceptible to the user.

An embodiment of this application provides another electronic device. The electronic device performs any one of the foregoing methods.

An embodiment of this application further provides a computer-readable storage medium, including instructions. When the instructions are run on a computer, the computer is enabled to perform any one of the foregoing methods.

An embodiment of this application further provides a computer program product including instructions. When the computer program product runs on a computer, the computer is enabled to perform any one of the foregoing methods.

An embodiment of this application further provides a chip. The chip includes a processor and an interface circuit. The interface circuit is coupled to the processor. The processor is configured to run a computer program or instructions, to implement the foregoing methods. The interface circuit is configured to communicate with another module other than the chip.

In descriptions of this application, unless otherwise specified, "/" means "or". For example, A/B may indicate A or B. The term "and/or" in this specification describes only an association relationship between associated objects and indicates that there may be three relationships. For example, A and/or B may indicate the following three cases: Only A exists, both A and B exist, and only B exists. In addition, "at least one" means one or more, and "a plurality of" means two or more than two. Terms such as "first" and "second" do not limit a quantity and an execution sequence, and the terms such as "first" and "second" do not indicate a definite difference.

In the descriptions of this application, a word such as "example" or "for example" is used to give an example, an illustration, or a description. Any embodiment or design scheme described as an "example" or "for example" in embodiments of this application should not be explained as being more preferred or having more advantages than another embodiment or design scheme. Exactly, use of the term "example", "for example", or the like is intended to present a related concept in a specific manner.

The foregoing descriptions of the implementations allow a person skilled in the art to clearly understand that, for the purpose of convenient and brief description, division into the foregoing functional modules is merely used as an example for illustration. During actual application, the foregoing functions may be allocated to different modules and implemented based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiments are merely examples. For example, the division into the modules or the units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a readable storage medium. Based on such an understanding, the technical solutions in embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip or the like) or a processor (processor) to perform all or some of the steps of the methods described in embodiments of this application. The storage medium includes various media that can store program code, for example a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. An application suppression method, applied to an electronic device, wherein the electronic device comprises a plurality of application windows, and the method comprises:
monitoring the plurality of application windows;
traversing window information of the plurality of application windows when it is detected that at least one application window in the plurality of application windows changes;
obtaining window statuses of the plurality of application windows based on the window information of the plurality of application windows and according to a filter rule, wherein the window statuses comprise an invisible state, and an application window that meets the filter rule is in the invisible state; and
performing GPU suppression on at least one first application or first process based on the window statuses of the plurality of application windows, wherein all application windows corresponding to the first application are in the invisible state, or all application windows corresponding to the first process are in the invisible state.

2. The method according to claim 1, wherein the plurality of application windows comprise at least one first window and at least one second window, the first window is in the invisible state, and the at least one second window is a window other than all first windows in the plurality of application windows; and
before the performing GPU suppression on at least one first application or first process, the method further comprises:
obtaining at least one third window based on window information of at least two second windows, wherein the third window is a window completely blocked by at least one of the at least two second windows; and
determining that the third window is in the invisible state.

3. The method according to claim 2, wherein the obtaining at least one third window based on window information of at least two second windows comprises:
determining, based on the window information of the at least two second windows, an arrangement order of the at least two second windows in a direction that is perpendicular to a display and in which light is emitted from the display;
determining, based on the window information and the arrangement order of the at least two second windows, that an orthographic projection of a first target application window is in a range of a second target application window, and the first target application window is arranged after the second target application window; and
determining the first target application window as the third window.

4. The method according to any one of claims 1 to 3, wherein a first filter rule comprises at least one of the following:
a window located outside an area of a desktop window;
a window whose size is less than or equal to a first threshold;
a shadow window of one window in the plurality of application windows;
a window whose attribute is a target attribute; or
a window whose attribute is an owned-window attribute and whose display range does not exceed a display range of an owner window.

5. The method according to claim 4, wherein the target attribute comprises at least one of a hiding attribute, an invisibleness attribute, a transparency attribute, and a child-window attribute.

6. The method according to any one of claims 1 to 5, further comprising:
canceling GPU suppression on the first process or the first application when it is detected that at least one window of the first application or the first process is switched to a preview window.

7. The method according to claim 1, further comprising:
minimizing all application windows that are in the invisible state.

8. The method according to any one of claims 1 to 7, wherein that the at least one application window changes comprises at least one of the following: a location of the at least one application window changes, a status of the at least one application window changes, and a size of the at least one window changes.

9. An electronic device, comprising one or more processors and a memory, wherein the memory stores code, and when the code is executed by the one or more processors, the electronic device is enabled to perform the method according to any one of claims 1 to 8.

10. A chip system, wherein the chip system is used in an electronic device, the chip system comprises one or more interface circuits and one or more processors, and the interface circuit and the processor are interconnected through a line; the interface circuit is configured to: receive a signal from a memory of the electronic device, and send the signal to the processor, wherein the signal comprises computer instructions stored in the memory; and when the processor executes the computer instructions, the electronic device is enabled to perform the method according to any one of claims 1 to 8.

11. A computer-readable storage medium, comprising computer instructions, wherein when the computer instructions are run on an electronic device, the electronic device is enabled to perform the method according to any one of claims 1 to 8.

12. A computer program product, wherein when the computer program product runs on a computer, the computer is enabled to perform the method according to any one of claims 1 to 8.
